# EUROPEAN PATENT SPECIFICATION

(11) **EP 0 891 914 B1**
(45) Date of publication and mention of the grant of the patent: **17.09.2003**
(21) Application number: 98113523.9
(22) Date of filing: 20.07.1998
(51) Int. Cl.: B62D 15/02, G01D 5/14

(54) **A steering sensor unit**
Steuerungssensoreinheit
Unité de capteur pour volant

(30) Priority: 18.07.1997 IT TO970650
(43) Date of publication of application: 20.01.1999
(73) Proprietor: TRW SIPEA S.p.A., 10042 Nichelino (IT)
(72) Inventor: Rubinato, Giampietro, 10028 Trofarello (IT)
(74) Representative: Cerbaro, Elena, Dr.

(56) References cited:
- EP-A- 0 443 940

## Description

The present invention concerns a steering sensor unit.

As is known, the great development in on board electronics in motor vehicles has led to the necessity of gathering a lot of information relating to the operational state of the motor vehicles themselves.

In particular, there has recently been much electronic development relating to driver assistance, which has led to the necessity of detecting the direction and angular velocity of the rotation of the motor vehicle steering wheel.

A bearing sensor assembly for sensing the direction and speed of a steering shaft is for example disclosed in EP-A-0 443 940 according to which the preamble of claim 1 is established. The bearing sensor assembly comprises a steering shaft support bearing having an elongated inner race, an elongated outer race and rolling elements arranged between the inner and outer races. The outer race is properly located within a column bearing housing, and the inner race is relatively rotatable with respect to the outer race. An encoder is mounted on the inner race and a detachable sensor mount is fixed to the outer race. Sensor mount has a first sensor and a second sensor which are preferably Hall-effect detectors and are positioned opposite encoder such that first sensor and second sensor can sense the radial magnetic field generated by the encoder as it rotates past the sensors.

The object of the present invention is to produce a steering sensor unit which is simple, economic and reliable.

According to the present invention there is provided a steering sensor unit, as defined in claim 1.

In order better to understand the present invention, a preferred embodiment is now described, purely by way of example, with reference to the accompanying drawings in which:
- Figure 1 is a perspective view of a steering sensor unit, produced according to a first embodiment of the present invention;
- Figure 2 is a side view of the sensor unit of Figure 1;
- Figure 3 is an exploded perspective view of an element of the sensor unit of Figure 1;
- Figure 4 is a front view of a face of the element of Figure 3;
- Figure 5 is an exploded perspective view of a part of the sensor unit of Figure 1;
- Figure 6 is a perspective view of a steering sensor unit formed according to a second embodiment of the present invention; and
- Figure 7 is a side view of the sensor unit of Figure 6.

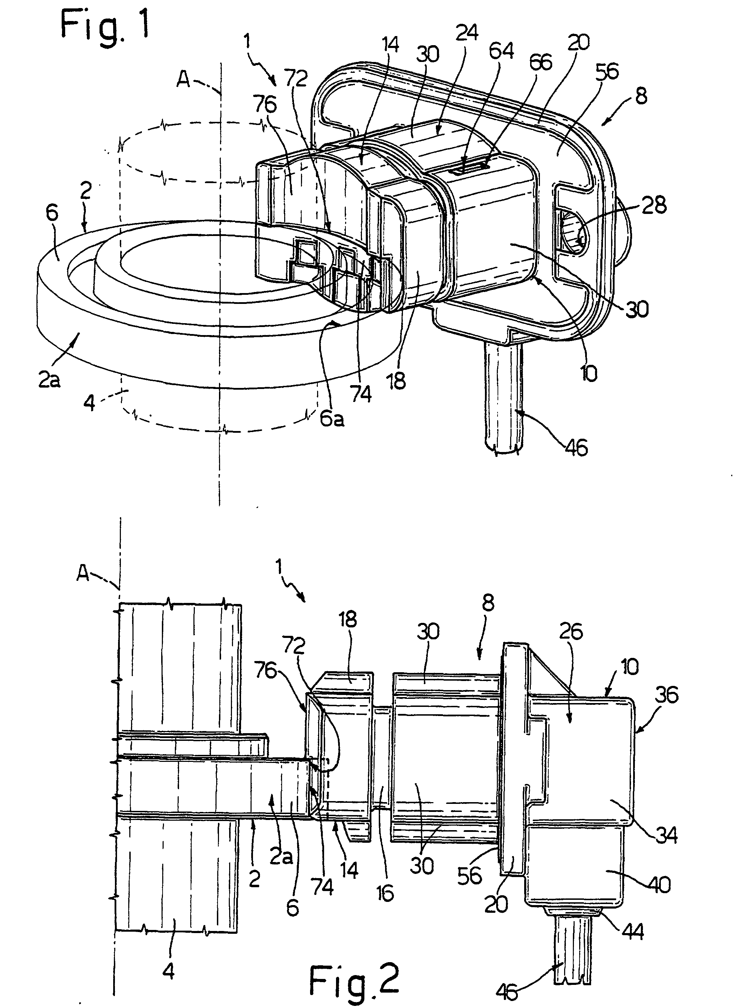

In Figures 1 and 2, the reference numeral 1 generally indicates a steering sensor unit formed according to a first embodiment of the present invention.

The steering sensor unit 1 includes a magnetic wheel 2 having an axis' of rotation A, preferably made from plastoferrite, intended to be fitted on a transmission shaft 4 fixed for rotation with a steering wheel (not shown) of a motor vehicle (for example, interference-fitted on the steering column) and having, for example, 40 NORTH magnetic poles and 40 SOUTH magnetic poles, uniformly distributed in alternate manner along a peripheral portion 6 thereof; and a Hall-effect detection device 8 fixed to a portion of the body (not shown) of the motor vehicle in a position facing the peripheral portion 6 of the magnetic wheel 2, and cooperating with the peripheral portion 6 in order itself to generate an output information signal indicating the speed, the number of turns, and the direction of rotation of the steering wheel.

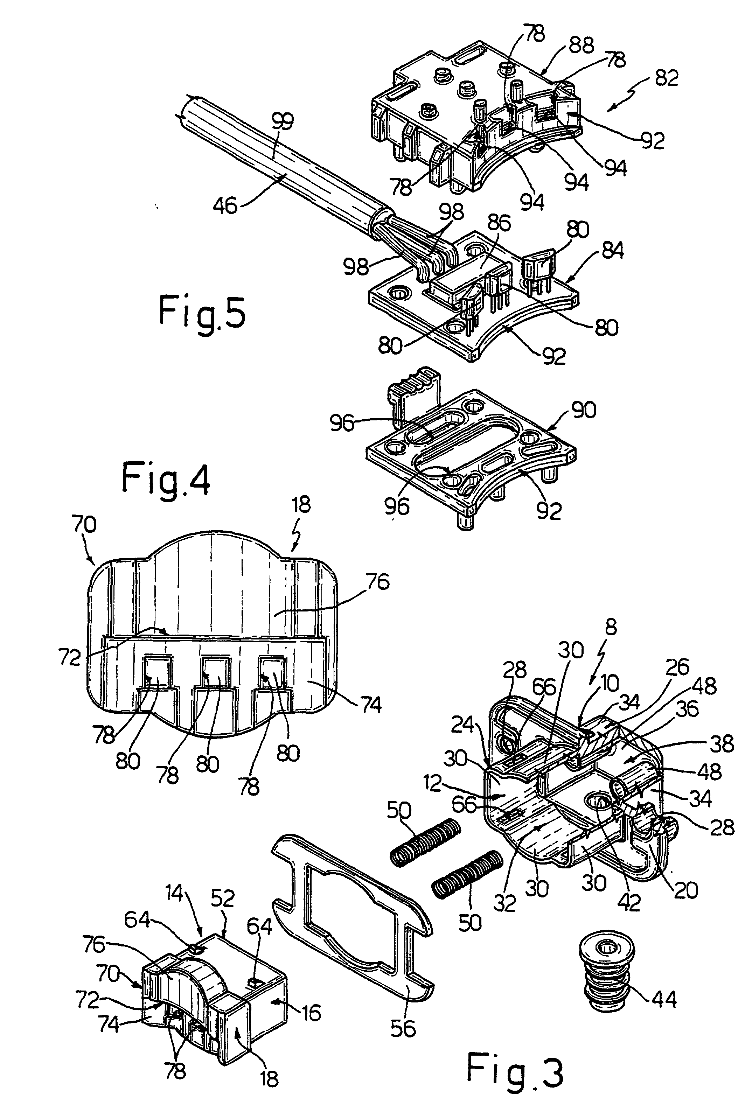

The Hall-effect detection device 8 includes, as illustrated in more detail in Figure 3, a substantially box-shape casing 10 having a cavity 12 open towards the transmission shaft 4; and a main body 14 including a substantially parallelepiped engagement portion 16 that is movable in the cavity 12 of the casing 10 in a directional substantially orthogonal to the axis of rotation A, and a portion 18 for coupling to the magnetic wheel, projecting from the casing 10 and cooperating with the peripheral portion 6 of the magnetic wheel 2 in the way described in more detail below.

The casing 10 is preferably made from a polyamide resin and includes a flange 20 for anchorage to the motor vehicle body, with a pair of through-holes 28 for fixing to the motor vehicle body, and first and second portions 24, 26, approximately parallelepiped in shape, extending from opposite sides of the flange 20.

The first portion 24 of the casing 10 comprises side walls 30 extending substantially orthogonal to the flange 20 and defining between them a first half cavity 32 open towards the outside, and the second portion 26 of the casing 10 comprises side walls 34 extending substantially orthogonal to the flange 20 and a base wall 36 parallel to the flange 20 and defining, together with the side walls, a second half cavity 38 which, together with the first half cavity 32, forms the cavity 12.

In addition, a projection 40 extends from a first side wall 34 of the second portion 26 of the casing 10, having a through-hole 42 in communication with the second half cavity 38, within which is interference-fitted a tubular element 44, preferably formed from HNBR material, having a corrugated outer surface and passed through by a cable 46 of the steering sensor unit 1.

The second portion 26 of the casing 10 further includes a pair of tubular elements 48 (Figure 3) extending into the half cavity 32 from the base wall 36, and towards the axis of rotation A; a pair of springs 50 is partially housed, within the tubular elements 48 which springs are compressed between the base wall 36 and a base wall 52 of the engagement portion 16 of the principal body 14, and which act in a direction orthogonal to the axis of rotation A in order to hold the coupling portion 18 of the main body 14 itself against the peripheral portion 6 of the magnetic wheel 2.

The casing 10 is further coupled to an annular gasket 56 preferably formed from HNBR material and located in abutment against the side of the flange 20 facing the wheel 2.

The engagement portion 16 of the main body 14 is provided with four engagement teeth 64 (Figure 3) of which a first pair is located on a surface of the engagement portion 16 and a second pair (not shown in Figure 3) is located on an opposite surface, engaging respective slots 66 formed in the first portion 24 of the casing 10 and having an elongate shape in a direction orthogonal to the axis of rotation A in order to enable the translation of the main body 14 and thus the engagement teeth 64 in a direction orthogonal to the axis of rotation A, as is explained better below.

The coupling portion 18 of the main body 14 has a front surface 70 (illustrated in detail in Figure 4) facing, in use, the magnetic wheel 2, defined by a curved outer surface concave towards the peripheral portion 6 of the magnetic wheel 2 itself, and located substantially coaxial with the magnetic wheel 2 itself.

In particular, the front surface 70 has a median shoulder 72 perpendicular to the axis of rotation A, which divides the front surface 70 itself into a retracted withdrawn portion 74 and a projecting portion 76.

In detail, the height of the retracted portion 74 is substantially the same as the height of the magnetic wheel 2 and, in use, is held by the springs 50 in abutment against the peripheral portion 6 of the magnetic wheel 2, slidingly cooperating therewith during the turning movements of the steering wheel.

In addition, the retracted portion 74 of the front surface 70 has three notches 78 disposed angularly adjacent and equidistant to each other, and defining seats for respective Hall-effect sensor elements 80 which are known and thus not described in detail.

In particular, the depth of the notches 78 is such that, after mounting the Hall-effect sensor elements 80 in these notches 78, they are at a predetermined distance, typically 0.2mm, from the outer surface of the front surface 70 itself.

The main body 14 is obtained by moulding plastics material on an assembly 82 of three stacked elements comprising, as illustrated in the exploded view of Figure 5, a printed circuit 84 in the middle, carrying the three sensor elements 80 and an electronic processing unit 86 for processing the signals generated by the sensor elements 80 themselves, and first and second lateral protective half-shells 88, 90 located on opposite sides of the printed circuit 84, these also being made from polyamide resin.

The printed circuit 84 and the two half-shells 88, 90 have respective frontal faces 92 defining, when stacked together, the central part of the front face 70 of the main body 14 and, in particular, the front face 92 of the first half-shell 88 defines both the median shoulder 72 and the zone of the retracted portion 74 of the front face 70 itself, in which the three notches 78 for housing the Hall-effect element 80 are located.

In addition, in order to enable the location of the Hall-effect sensor elements 80 within the respective notches 78 during the stacking of the printed circuit 84 and the two half-shells 88, 90, the first half-shell 88 also has three seats 94 formed through the extension of the notches 78, with a shape substantially identical to that of the Hall-effect sensor elements 80 themselves. In this way, during stacking, the sensor elements 80 pass through the seats 94 to locate in the respective notches 78, the terminals for connecting the Hall-effect sensor elements 80 to the printed circuit 84 remaining housed within the seats 94 once stacking is complete.

The two lateral half-shells 88, 90 also have cavities 96 that accommodate the electronic processing circuit 86 and all of the projecting parts of the printed circuit 84 such as, for example, the weldings of the components etc. In this way, all the components connected to the printed circuit 84 are protected both from external agents and from the infiltration of plastics material during moulding, as well as from the infiltration of water during its use on board the motor vehicle.

The electronic processing circuit 86 processes the signals provided by the sensor elements 80 in known way and which is therefore not described in detail, and provides as output a single information signal indicating the speed, the number of turns and the direction of rotation of the steering wheel.

The cable 46 of the detection device 8 comprises three electrical cables 98, respectively for the electrical supply, earthing and the information signal, connected to the printed circuit 84, housed in a single outer insulating sheath 99 and leaving the second body 26 of the casing 10 through the through-hole 42 in the parallelepiped element 40.

In use, the retracted portion 74 of the front face 70 is held by the springs 50 in abutment against the peripheral portion 6 of the magnetic wheel 2 such that the sensor elements 80 face the peripheral portion 6 itself, and slidingly cooperates therewith during the movements of the steering wheel of the motor vehicle. In addition, the peripheral portion 6 of the magnetic wheel 2 has a circumferential edge 6a disposed in abutment against the median shoulder 72 of the front face 70 itself.

In addition, by virtue of the possible movement of the main body 14 with respect to the casing 10, it is possible to compensate for the tolerances relating to the transmission shaft 4 in such a way as to have a distance between the Hall-effect sensor elements 80 and the lateral surface 2a of the magnetic wheel 2 which ensures the presence of a signal that is sufficient for the detection of the speed, the number of turns, and the direction of rotation of the steering wheel.

During steering, the Hall-effect sensor elements 80 detect the magnetic field variation caused by the movement of the magnetic poles of the magnetic wheel 2, and generate respective electrical signals that vary between a first and a second level depending on the magnetic pole facing them at that moment.

The signals generated by the sensor element 80 are then processed by the electronic processing circuit 86 which then provides as output the information signal indicating the speed, the number of turns and the direction of rotation of the steering wheel.

In particular, by utilising three Hall-effect sensor elements 80 and a magnetic wheel 2 with 80 magnetic poles, the steering sensor unit 1 has an angular resolution of 1.5°.

According to a first embodiment that is not illustrated, the electronic processing circuit 86 may be omitted such that, instead of the information signal indicating the speed, the number of turns and the direction of rotation of the steering wheel, the electrical signals generated by the sensor elements 80 are directly available to the user, which signals must then be processed in order to obtain the aforesaid information. In this case, five electrical cables 98 are connected to the printed circuit 84, of which three are for the electrical signals generated by the sensor elements 80, and two are for the supply voltage and for earthing.

According to a further embodiment, not shown, the electronic processing circuit 86 can provide as output, in addition to the information signal, a further electronic pulse signal in which each pulse indicates a change in the direction of rotation of the steering wheel. In this case, four electrical cables 98 are connected to the printed circuit 84, of which one is for the information signal, one is for the pulse signal, and two are for the supply voltage and for earthing.

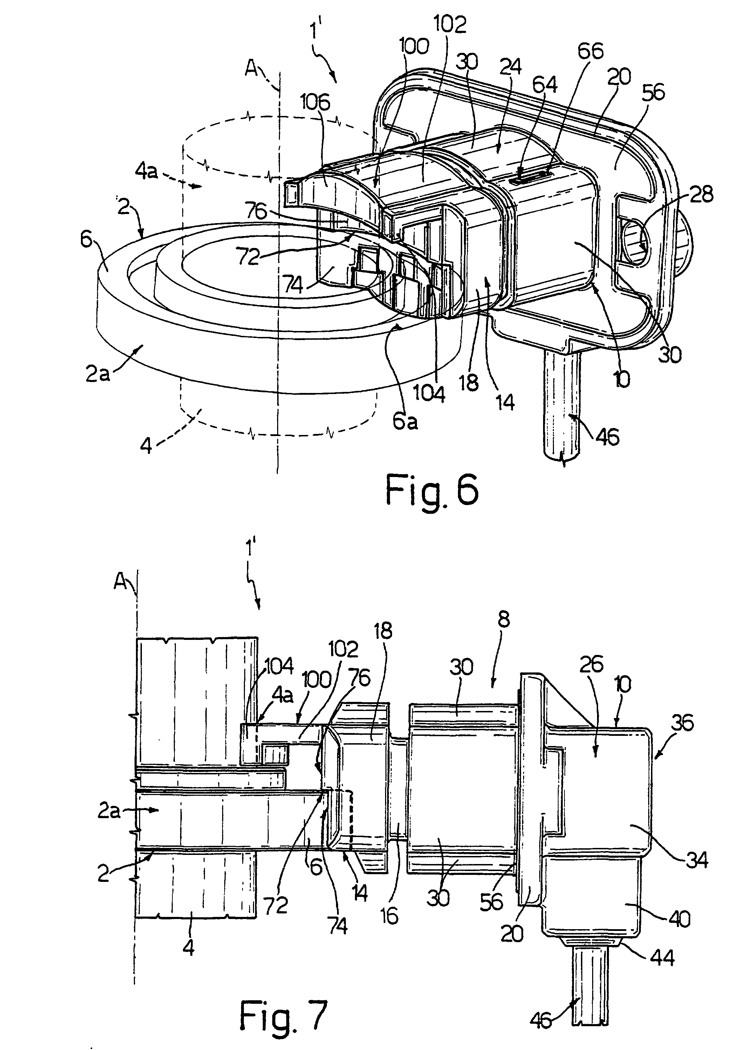

In Figures 6 and 7, the reference numeral 1' generally indicates a steering sensor unit produced according to a second embodiment of the present invention.

The steering sensor unit 1' is substantially similar to the steering sensor unit 1, differing therefrom due to the fact that it also includes a spacer element 100 projecting from the projecting portion 76 of the front face 70, starting from an edge of the projecting portion 76 itself and extending towards the transmission shaft 4.

In particular, the spacer element 100 is substantially L-shape in transverse section and comprises a first wall 102 of predetermined length and extending substantially orthogonal to the front face 70 of the main body 14; and a second wall 104 extending substantially orthogonal to the first wall 102 and having a front face 106 facing the transmission shaft 4, substantially coaxial with the transmission shaft 4 itself.

In use, the front face 106 of the second wall 104 of the spacer element 100 is held by the springs 50 in abutment against the lateral surface 4a of the transmission shaft 4, and the length of the first wall 102 is such that the retracted position 74 of the front face 70 of the main body 14 faces, but is not slidable on, the peripheral portion 6 of the magnetic wheel 2.

In addition, the length of the first wall 102 is such that the distance between the peripheral portion 2a of the magnetic wheel 2 and the Hall-effect sensor elements 80 is within a range of predetermined value so as to ensure the presence of a signal sufficient for the detection of the speed, the number of turns and the direction of rotation of the steering wheel.

In the second embodiment, there is no longer any sliding between the retracted portion 74 of the front face 70 of the main body 14 and the peripheral portion 6 of the magnetic wheel 2, thus avoiding wear of these portions, and thus the formation of dust between the Hall-effect sensor elements 80 and the magnetic poles.

It is clear that variations and modifications may be introduced to the steering sensor unit 1, 1' described and illustrated here, without by this departing from the ambit of protection of the present invention as defined in the appended claims.

## Claims

1. A steering sensor unit (1) including a magnetic wheel (2) having an axis of rotation (A), coupled for rotation with a steering wheel of a motor vehicle and having a plurality of first and second magnetic poles of opposite polarity, uniformly distributed in alternating manner along an outer peripheral portion (6) thereof; and a Hall-effect detection device (8) fixed to the body of the motor vehicle in a position facing said peripheral portion (6) of said magnetic wheel (2) and cooperating, in use, with said peripheral portion (6) in order to generate at least one output information signal indicating the value of an operating quantity associated with said steering wheel; said Hall-effect detection device (8) comprising a main body (14) having a front face (7) facing and adjacent said peripheral portion (6) of said magnetic wheel (2), said main body (14) having adjacent Hall-effect sensor elements (80) at said front face (70) and a first abutment surface (74, 106) at a predetermined distance from said Hall-effect sensor elements (80) and located, in use, in abutment against a second abutment surface (2a, 4a) fixed with respect to said magnetic wheel (2); said front face (70) being defined by a curved outer surface concave towards the said peripheral portion (6) of said magnetic wheel (2) and, in use, substantially coaxial with said magnetic wheel (2); **characterised in that** said front face (70) has a median shoulder (72) subdividing the front face (70) into a retracted portion (74) and a projecting portion (76), said retracted portion (74) being disposed, in use, adjacent and facing said peripheral portion (6) of said magnetic wheel (2) and having angularly adjacent notches (78) defining seats for respective said Hall-effect sensor elements (80).

2. A steering sensor unit according to Claim 1, **characterised in that** said magnetic wheel (2) is fitted to a transmission shaft (4) fixed for rotation with said steering wheel.

3. A steering sensor unit according to claim 2, **characterised in that** the said Hall-effect detection device (8) comprises a casing (10) rigidly fixed to the said body of the said motor vehicle, with a cavity (12) open, in use, towards the said transmission shaft (4); and **in that** the said main body (14) includes an engagement portion (16) movable within the said cavity (12) of the said casing (10), and a portion (18) for coupling with the magnetic wheel (2) projecting from the casing (10), cooperating in use with said peripheral portion (6) of said magnetic wheel (2) and having a face facing said magnetic wheel (2) to define said front face (70).

4. A steering sensor unit according to Claim 3, **characterised in that** said engagement portion (16) is provided with engagement teeth (64) engaging respective slots (66) formed in the said casing (10), elongate in a transverse direction to said axis of rotation (A); and **in that** the said Hall-effect detection device (8) further includes elastic means (50) interposed between said casing (10) and said engagement portion (16) and acting in a direction transverse to said axis of rotation (A) in order to hold said main body (14) against said peripheral portion (6) of said magnetic wheel (2).

5. A steering sensor unit according to any of claims from 1 to 4, **characterised in that** a lateral surface (2a) of said magnetic wheel (2) defines said second abutment surface, and **in that** said retracted portion (74) of said front face (70) defines said first abutment surface.

6. A steering sensor unit according to any of claims from 2 to 4, **characterised in that** a lateral surface (4a) of said transmission shaft (4) defines said second abutment surface, and **in that** said main body (14) includes a spacer element (100) projecting from said projecting portion (76) of said front face (70) in a direction transverse said axis of rotation (A), having a predetermined length and with a front face (106) facing said transmission shaft (4) coaxial with the transmission shaft (4), defining said first abutment surface.

7. A steering sensor unit according to any of claims from 1 to 6, **characterised in that** said main body (14) is obtained by moulding a plastics material onto an assembly (82) of three stacked elements comprising a central printed circuit (84) carrying said sensor elements (80), and first and second lateral protective half-shells (88, 90) located on opposite sides of said printed circuit (84).

8. A steering sensor unit according to any preceding claim, **characterised in that** the operating quantity associated with said steering wheel comprises the speed of rotation, the number of turns and the direction of rotation of said steering wheel.

## Patentansprüche

1. Lenkungs-Sensor-Einheit (1), die umfaßt:
ein Magnetrad (2), das eine Drehachse (A) aufweist, die zur Drehung mit einem Lenkrad eines Kraftfahrzeugs gekoppelt ist, und mehrere erste und zweite Magnetpole entgegengesetzter Polarität aufweist, die gleichmäßig abwechselnd am Außenumfangsabschnitt (6) des Rades verteilt sind, und
eine Hall-Effekt-Erfassungsvorrichtung (8), die an der Karosserie des Kraftfahrzeuges in einer Position befestigt ist, die dem Außenumfangsabschnitt (6) des Magnetrades (2) gegenüberliegt und im Betrieb mit dem Außenumfangsabschnitt (6) zusammenwirkt, um mindestens ein Ausgangsinformationssignal zu erzeugen, das den Wert einer der dem Lenkrad zugeordneten Operationsgröße anzeigt,
wobei die Hall-Effekt-Erfassungsvorrichtung (8) umfaßt: einen Hauptkörper (14) der eine Vorderfläche (7) aufweist, die dem Außenumfangsabschnitt (6) des Magnetrades (2) gegenüberliegt und diesem benachbart ist,
wobei der Hauptkörper (14) benachbarte Hall-Effekt-Sensor-Elemente (80) an der Vorderfläche (70) und eine erste Anlagefläche (74, 106) in einem vorgegebenen Abstand von den Hall-Effekt-Sensor-Elementen (80) aufweist und im Betrieb an eine zweite Anlagefläche (2a, 4a) anliegend angeordnet ist, die in Bezug auf das Magnetrad (2) festgelegt ist,
wobei die Vorderfläche (70) durch eine gekrümmte Außenfläche vorgegeben ist, die konkav zum Außenumfangsabschnitt (6) des Magnetrades (2) ist, und im Betrieb im wesentlichen mit dem Magnetrad (2) koaxial ist,
**dadurch gekennzeichnet,**
**daß** die Vorderfläche (70) eine mittlere Schulter (72) aufweist, die die Vorderfläche (70) in einen zurückgezogenen Abschnitt (74) und einen vorstehenden Abschnitt (76) unterteilt,
wobei der zurückgezogene Abschnitt (74) im Betrieb dem Außenumfangsabschnitt (6) des Magnetrades (2) benachbart und gegenüberliegend angeordnet ist, und unter einem Winkel nebeneinanderliegende Kerben (78) aufweist, die Sitze für die entsprechenden Hall-Effekt-Sensor-Elemente (80) vorgeben.

2. Lenkungs-Sensor-Einheit nach Anspruch 1, **dadurch gekennzeichnet, daß** das Magnetrad (2) an einer Getriebewelle (4) angeordnet ist, die zur Drehung mit dem Lenkrad befestigt ist.

3. Lenkungs-Sensor-Einheit (1) nach Anspruch 2, **dadurch gekennzeichnet, daß** die Hall-Effekt-Erfassungsvorrichtung (8) ein Gehäuse (10) umfaßt, das starr an der Karosserie des Kraftfahrzeugs befestigt ist, wobei ein Hohlraum (12) im Betrieb zur Getriebewelle (4) offen ist, und der Hauptkörper (14) einen Eingriffsabschnitt (16) umfaßt, der innerhalb des Hohlraums (12) des Gehäuses (10) bewegbar ist, und einen Abschnitt (18) zur Kopplung mit dem Magnetrad (2), das vom Gehäuse (10) hervorragt und im Betrieb mit dem Umfangsabschnitt (6) des Magnetrades (2) zusammenwirkt und eine Fläche aufweist, die dem Magnetrad (2) zugewendet ist und die Vorderfläche (70) vorgibt.

4. Lenkungs-Sensor-Einheit (1) nach Anspruch 3, **dadurch gekennzeichnet, daß** der Eingriffsabschnitt (16) mit Eingriffszähnen (64) ausgestattet ist die in entsprechende Schlitze (66) eingreifen, die im Gehäuse (10) länglich in einer Richtung transversal zur Drehachse (A) ausgebildet sind, und daß die Hall-Effekt-Erfassungsvorrichtung (8) ferner eine elastische Einrichtung (50) umfaßt, die zwischen dem Gehäuse (10) und dem Eingriffsabschnitt (16) angeordnet ist und in einer Richtung wirkt, die transversal zur Drehachse (A) ist, um den Hauptkörper (14) gegen den Umfangsabschnitt (6) des Magnetrades (2) gepreßt zu halten.

5. Lenkungs-Sensor-Einheit (1) nach einem der Ansprüche 1 bis 4, **dadurch gekennzeichnet, daß** eine Seitenfläche (2a) des Magnetrades (2) die zweite Anlagefläche vorgibt, und daß der zurückgezogene Abschnitt (74) der Vorderfläche (70) die erste Anlagefläche vorgibt.

6. Lenkungs-Sensor-Einheit (1) nach einem der Ansprüche 2 bis 4, **dadurch gekennzeichnet, daß** eine Seitenfläche (4a) der Getriebewelle (4) die zweite Anlagefläche vorgibt, und daß der Hauptkörper (14) ein Abstandselement (100) umfaßt, das vom vorstehenden Abschnitt (76) der Vorderfläche (70) in einer Richtung hervorragt, die transversal zur Drehachse (A) ist und eine vorgegebene Länge aufweist, und wobei eine Vorderfläche (106) der Getriebewelle (4) zugewendet und koaxial zu dieser ist und die erste Anlagefläche vorgibt.

7. Lenkungs-Sensor-Einheit (1) nach einem der Ansprüche 1 bis 6, **dadurch gekennzeichnet, daß** der Hauptkörper (14) durch Formen eines Kunststoffmaterials auf einem Aufbau (82) von drei übereinandergestapelten Elementen erhalten wird und umfaßt: eine zentrale gedruckte Schaltung (84), die die Hall-Effekt-Sensor-Elemente (80) trägt, und eine erste und eine zweite seitliche Schutzhalbschale (88, 90), die an den der gedruckten Schaltung (84) gegenüberliegenden Seiten angeordnet sind.

8. Lenkungs-Sensor-Einheit (1) nach einem der vorhergehenden Ansprüche, **dadurch gekennzeichnet, daß** die dem Lenkrad zugeordnete Operationsgröße die Drehgeschwindigkeit, die Anzahl der Umdrehungen und die Drehrichtung des Lenkrades umfaßt.

## Revendications

1. Unité de capteur pour volant (1) comprenant une roue magnétique (2) avec un axe de rotation (A), accouplée pour être en rotation avec le volant d'un véhicule automobile et comprenant une pluralité de premiers et seconds pôles magnétiques de polarité opposée, uniformément répartis de façon alternée le long d'une partie périphérique (6) de celle-ci ; et un dispositif de détection à effet Hall (8) fixé à la carrosserie du véhicule automobile dans une position face à ladite partie périphérique (6) de ladite roue magnétique (2) et accouplé, au cours de l'utilisation, à ladite partie périphérique (6) de façon à générer au moins un signal d'information de sortie qui indique la valeur d'une quantité de fonctionnement associée audit volant ; ledit dispositif de détection à effet Hall (8) comprenant un corps principal (14) avec une surface frontale (7) faisant face et adjacent à ladite partie périphérique (6) de ladite roue magnétique (2), ledit corps principal (14) comprenant des éléments de capteurs à effet Hall (80) sur ladite surface frontale (70) et une première surface de butée (74, 106) à une distance prédéterminée desdits éléments de capteurs à effet Hall (80) et placée, au cours de l'utilisation, en butée contre une seconde surface de butée (2a, 4a) fixée par rapport à ladite roue magnétique (2) ; ladite surface frontale (70) étant définie par une surface extérieure incurvée concave en direction de ladite partie périphérique (6) de ladite roue magnétique (2) et, lors de l'utilisation, substantiellement coaxiale avec ladite roue magnétique (2) ; **caractérisée en ce que** ladite surface frontale (70) comprend un épaulement médian (72) qui sépare la surface frontale (70) en une partie rétractée (74) et une partie saillante (76), ladite partie rétractée (74) étant placée, au cours de l'utilisation, adjacente et face à ladite partie périphérique (6) de ladite roue magnétique (2) et comprenant des encoches adjacentes angulaires (78) qui définissent des emplacements pour lesdits éléments de capteurs à effet Hall (80) respectifs.

2. Unité de capteur pour volant selon la revendication 1, **caractérisée en ce que** ladite roue magnétique (2) est raccordée à un arbre de transmission (4) pour être en rotation avec ledit volant.

3. Unité de capteur pour volant selon la revendication 2, **caractérisée en ce que** ledit dispositif de détection à effet Hall (8) comprend un logement (10) fixé de façon rigide à ladite carrosserie dudit véhicule automobile, avec une cavité (12) ouverte, au cours de l'utilisation, en direction dudit arbre de transmission (4) ; et **en ce que** ledit corps principal (14) comprend une partie d'accouplement (16) mobile à l'intérieur de ladite cavité (12) dudit logement (10), et une partie (18) pour s'accoupler avec la roue magnétique (2) en saillie depuis le logement (10), s'accouplant au cours de l'utilisation à ladite partie périphérique (6) de ladite roue magnétique (2) et ayant un côté face à ladite roue magnétique (2) pour définir ladite surface frontale (70).

4. Unité de capteur pour volant selon la revendication 3, **caractérisée en ce que** ladite partie d'accouplement (16) comprend des dents d'accouplement (64) s'accouplant dans les encoches (66) respectives formées dans ledit logement (10), ayant une forme allongée dans un sens transversal audit axe de rotation (A) ; et **en ce que** ledit dispositif de détection à effet Hall (8) comprend également un moyen élastique (50) placé entre ledit logement (10) et ladite partie d'accouplement (16) et agissant dans un sens transversal audit axe de rotation (A) de façon à maintenir ledit corps principal (14) contre ladite partie périphérique (6) de ladite roue magnétique (2).

5. Unité de capteur pour volant selon l'une quelconque des revendications 1 à 4, **caractérisée en ce qu'**une surface latérale (2a) de ladite roue magnétique (2) définit ladite seconde surface de butée, et **en ce que** ladite partie rétractée (74) de ladite surface frontale (70) définit ladite première surface de butée.

6. Unité de capteur pour volant selon l'une quelconque des revendications 2 à 4, **caractérisée en ce qu'**une surface latérale (4a) dudit arbre de transmission (4) définit ladite seconde surface de butée, et **en ce que** ledit corps principal (14) comprend une entretoise (100) en saillie à partir de ladite partie saillante (76) de ladite surface frontale (70) dans un sens transversal audit axe de rotation (A), étant de longueur prédéterminée et ayant une surface frontale (106) face audit arbre de transmission (4) coaxial avec l'arbre de transmission (4), définissant ladite première surface de butée.

7. Unité de capteur pour volant selon l'une quelconque des revendications 1 à 6, **caractérisée en ce que** ledit corps principal (14) est obtenu par moulage d'une matière plastique sur un ensemble (82) de trois éléments empilés comprenant un circuit imprimé central (84) comportant lesdits éléments de capteur (80), et une première et une seconde demi-coques latérales de protection (88, 90) placées sur des côtés opposés dudit circuit imprimé (84).

8. Unité de capteur pour volant selon l'une quelconque des revendications précédente, **caractérisée en ce que** la quantité de fonctionnement associée audit volant comprend la vitesse de rotation, le nombre de tours et le sens de rotation dudit volant.
